# EUROPEAN PATENT APPLICATION

(11) **EP 1 376 814 A2**
(43) Date of publication of application: **02.01.2004**
(21) Application number: 03013361.5
(22) Date of filing: 17.06.2003
(51) Int. Cl.: H02J 9/00, H02M 3/00

(54) **Power supply control circuit**

(30) Priority: 18.06.2002 JP 2002177120
(71) Applicant: SANKYO SEIKI MFG. CO. LTD., Suwa-gun, Nagano-ken 393-8511 (JP)
(72) Inventor: Yokozawa, Mitsuo, Suwa-gun, Nagano (JP); Kuroiwa, Yukio, Suwa-gun, Nagano (JP)
(74) Representative: Freitag, Joachim, Dipl.-Phys.

(57) **Abstract**

A power supply control circuit (10) that automatically shuts off power supply to an electric apparatus comprises a photocoupler for inputting a remote control signal, a switching circuit having a press-button switch provided toward an output end of the photocoupler and a power supply that is momentarily activated by shorting the switching circuit. Accordingly, a self-holding circuit is provided that maintains the active mode of the remote control signal for the photocoupler.

## Description

The present invention relates to a power supply control circuit that activates or shuts down power supply to a variety of electronic terminals in a secondary circuit.
This application is based on Japanese Application No. 2002-177120, filed on June 18, 2002, the complete disclosure of which is hereby incorporated by reference.

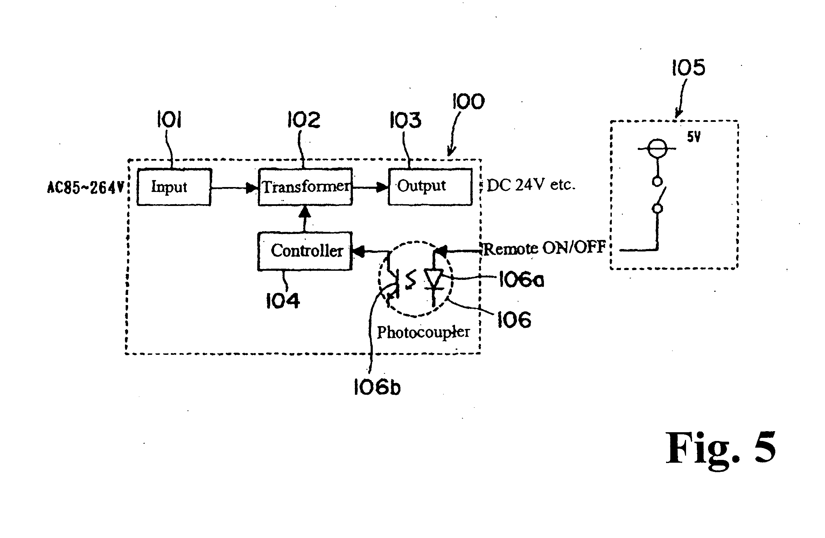

A known representative power supply control circuit is installed in a copier or similar electric apparatus to automatically shut down power supply, thereby saving power consumption.
To control power supply in a power system in a general automatic power supply shutdown function, a power supply and a control circuit are separately provided such that the circuit in the control system can continue to operate after power supply is shutdown.
A control circuit in a power supply is described herein with reference to Fig. 5.
Power supply control circuit 100 illustrated in Fig. 5 is generic wherein AC current within a range of 85 - 264 V is input from a commercial power supply at terminal 101 at 50 Hz or 60 Hz. Then, this AC current is transformed to a given voltage (e.g. 24 V DC current) by transformer 102 to be output at terminal 103 to supply power to a power system and the like.
Controller 104 controls each circuit in transformer 102. Controller 104 is actuated as photocoupler 106 receives a remote control signal from remote signal control circuit 105. ln other words, in photocoupler 106, light emitting diode 106a converts the remote control signal into fight, which is then converted back to an electric signal again through phototransistor 106b. It is this electric signal that actuates controller 104.

Nonetheless, to configure a conventional power supply control circuit 100 in such a way that circuit 105 or the like in a control system does not shutdown even though the power supply circuit of a power system is disconnected, it is essential that circuit 105 of the control system, for example, have a separate power supply for control circuit 105.

The primary object of the present invention is to provide a power supply control circuit that is capable of activating a power supply without using an external power supply and of automatically shutting off a power supply, thereby saving power consumption. Yet another object of the present invention is to provide a power supply control circuit that is further capable of shutting off the power supply before a given period time expires. Yet another object of the present invention is to provide a power supply control circuit that is capable of further shutting off the power source when an electric apparatus enters an abnormal state.

To achieve the above objectives, the power supply control circuit in accordance with the invention is a power supply control circuit that automatically shuts off power supply in an electric apparatus. The power supply control circuit comprises: a photocoupler for inputting a remote control signal; a switching circuit having a press-button switch provided toward the output end of the photocoupler; and a power supply that is momentarily activated by shorting the switching circuit.
A self-holding circuit that maintains the active state of the remote control signal for the photocoupler is thus provided. This circuit allows the remote control signal to be sent to the photocoupler being maintained in the active state such that an output from the power supply is maintained for a given period of time after opening the switching circuit. The circuit inverts the remote control signal to a negative cycle after a given period of time elapses.

Manual pressing of a button (e.g. press-button switch) turns the switch on only momentarily such that the power supply momentarily short circuits while the remote control signal from the photocoupler is maintained in an active mode. The remote control signal continues to be active for a given period time after the switching circuit is opened, and the remote control signal is inverted to a negative cycle after a given period time elapses. The power supply is thus automatically shut off and the need for an external power supply is eliminated. Subsequently, power consumption is saved.

The present invention further has the power supply control circuit mentioned above which further comprises an automatic reversing switch that inverts the remote control signal to a negative cycle before a given period time elapses.
For this reason, at any point in time before the given period time elapses, turning on the automatic inversion switch inverts the remote control signal to a negative cycle. A power supply can thus automatically be shut off during the period starting from opening of a switch circuit to any time before a given period time elapses.

Another form of the invention has the power supply control circuit mentioned above which further comprises an abnormality detection circuit for detecting an abnormality in the electric apparatus to invert the remote control signal to a negative cycle upon detection of an abnormality in the electric apparatus.
When the abnormality detection circuit detects an abnormality in the electric apparatus, it inverts the remote control signal to a negative cycle. The power supply is thus automatically shut off when an abnormality is present in the electric apparatus.

In the drawings:
- Fig. 1: is a schematic circuit block diagram illustrating an embodiment of the power control circuit of the present invention;
- Fig. 2: is a detailed circuit block diagram illustrating an embodiment of the power control circuit of the present invention;
- Fig. 3: is a diagram illustrating the remote signal control circuit;
- Fig. 4: is a timing chart for the remote signal control circuit; and
- Fig. 5: is a schematic circuit block diagram illustrating a power supply control circuit of conventional technology.

The configuration of the present invention is described in detail herein with reference to drawings illustrating an embodiment.

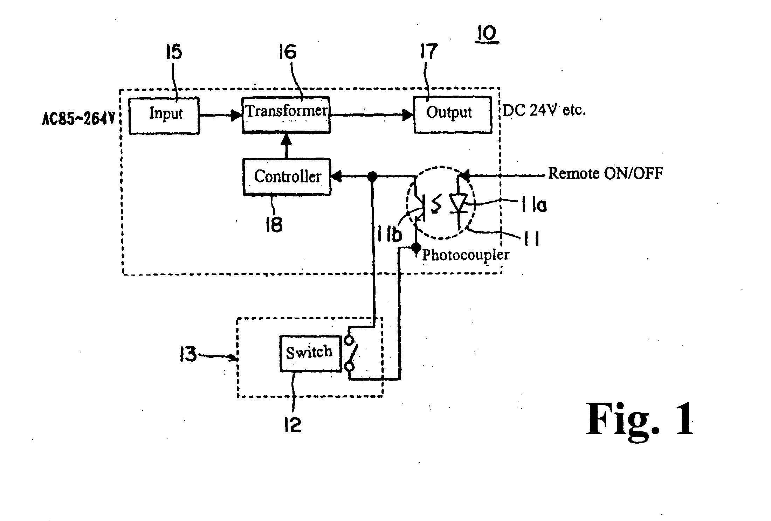

Figs. 1 - 4 describe an embodiment of the power supply control circuit of the present invention.

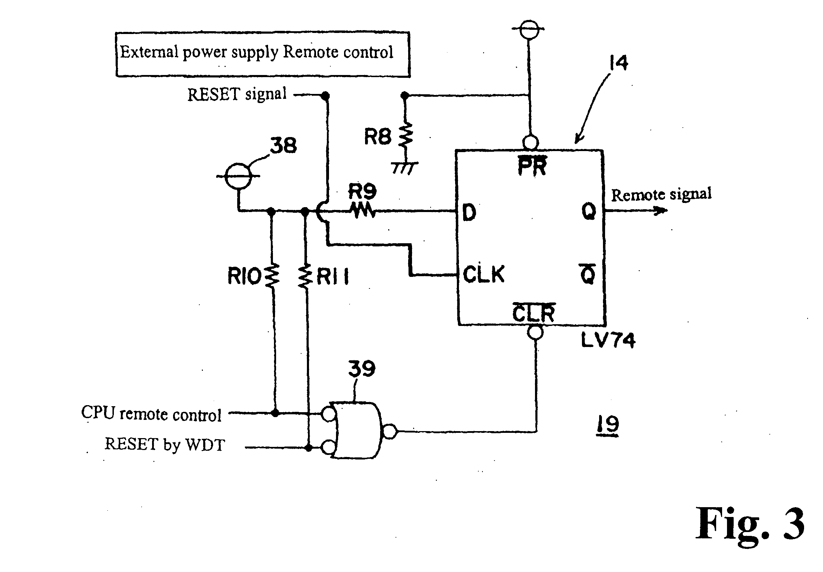

Fig. 1 illustrates a power supply control circuit 10 that outputs DC secondary power with AC primary power supply by the switching method. The main configuration of the circuit comprises: a photocoupler 11; a press button switching circuit 13 provided toward the output end of photocoupler 11; and a latch-in circuit 14 (Fig. 3) that maintains the active mode of the remote control signal from photocoupler 11 utilizing the power supply activated by means of momentarily short circuiting switching circuit 13. The power supply output is thus maintained for a given period time after switching circuit 13 is opened, and after a given period time elapses, the remote control signal is inverted to a negative cycle.

In the power supply control circuit 10, AC current within a range of 85 - 264 V is input from a commercial power supply at input terminal 15 at 50 Hz or 60 Hz. Then, transformer (hereinafter referred to as "voltage converter") 16 converts the AC current to a given voltage and rectifies the same to output DC current (e.g. 24 V) at terminal 17 to a power system and the like.

Controller 18 controls voltage converter 16. Controller 18 is actuated as a remote control signal from remote signal control circuit 19 (Fig. 3) having a 5 V external power supply is input to photocoupler 11. ln other words, photocoupler 11 converts the remote control signal to light by light emitting diode 11 a and converts the light back to an electrical signal by phototransistor 11b. It is this electrical signal that actuates controller 18. Switching circuit 13 is connected to the terminal of photo-transistor 11b. A press-button switch 12 is provided in the middle of switching circuit 13.

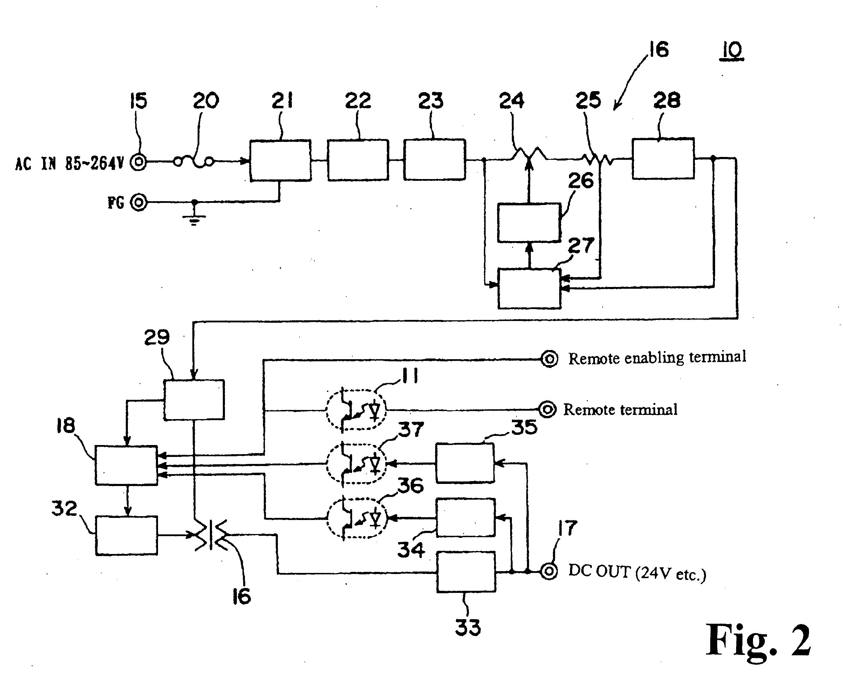

Power supply control circuit 10 is configured in the manner illustrated in Fig. 2 for example: DC current, that is rectified through noise filter 21, rectifier 22, entry current prevention unit 23, booster chalk 24, current detection resistor 25, inverter 26, controller 27, and rectifier 28, is boosted by transformer 16 such that the boosted AC current is converted to DC current by rectifier 33 to be output at terminal 17. Controller 18 controls transformer 16 utilizing inverter 32 based on:
(1) a current detecting signal from current detector 29, which is of the numerical value of DC current input at transformer 16;
(2) another signal from excess voltage protection unit 34 is derived from monitoring whether the output at terminal 17 is the excess voltage; and
(3) another signal from controller 35 derived from monitoring whether the DC current output at terminal 17 is in shortage.
Signals from excess voltage protection unit 34 and controller 35 are input to controller 18 via photocouplers 36 and 37 respectively. Note that in Fig. 2, Reference Symbol 15 is an input terminal and Reference Symbol 20 is a fuse.

In the power supply control circuit 10, as an incoming remote control signal from remote signal control circuit 19 having a 5 V external power supply is input to photocoupler 11, controller 18 is actuated. Power supply control circuit 10 actuates controller 18 even though a remote control signal is not sent as long as an operator presses button switch 12 to short circuit the output end of photocoupler 11. The press-button switch 12 is attached to an operation panel.

Next, remote signal control circuit 19 is described in detail herein with reference to Fig. 3.
Remote signal control circuit 19 has a latch-in circuit 14 utilizing a flip flop IC. A remote control signal is output at terminal "Q". The "PR" terminal is fixed to "H" (HIGH). A power supply monitoring signal (reset signal) is input at the "CLK" terminal, and the remote control signal is synchronized with the reset signal to prepare for operation. A Watchdog Timer (WDT) inputs an automatic reset signal in response to an abnormality. Further, the "CLR" terminal is connected to NOR circuit 39. The remote control signal from the Central Processing Unit (CPU) (not illustrated) and the automatic reset signal sent by the WDT responding to an abnormality are input at the NOR circuit 39. An automatic reset switch 12 is provided on an operation panel (not illustrated).

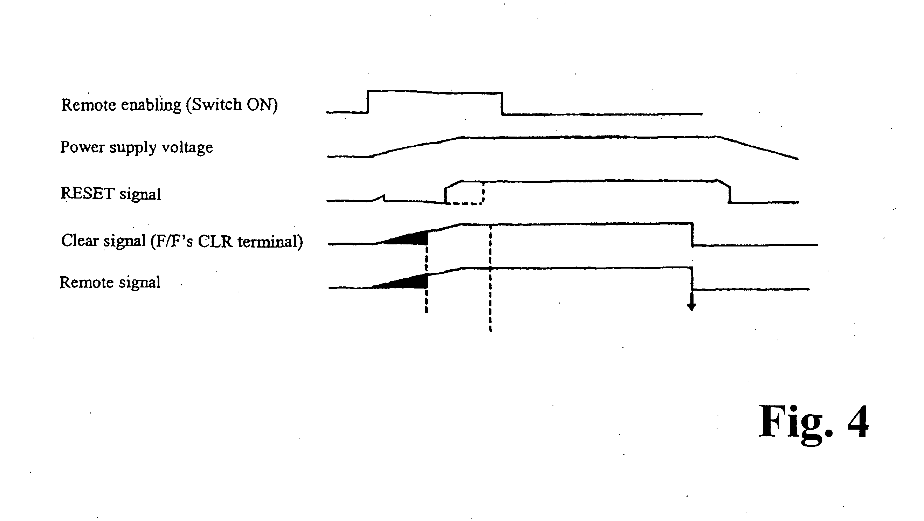

Now, operation of remote signal control circuit 19 utilizing switching circuit 13 is described herein with reference to a circuit diagram illustrated in Fig. 3 and a timing chart illustrated in Fig. 4.
Upon manual pressing of a press-button switch 12, photocoupler 11 short circuits at its output end to turn the remote signal into an active mode overriding the remote control signal; power supply is activated so as to supply power to the control circuit of the apparatus having power supply control circuit 14. The CPU in the control circuit thus retains the active state of the remote signal. As the output end of photocoupler 11 short circuits, a remote control signal is output overriding the state of the remote control terminal. External power supply 38, thus, supplies secondary power to power supply control circuit 10 such that the remote control signal is set to the HIGH level as the reset signal sets in the HIGH mode. Connecting (supplying) the remote control signal to the remote control terminal in the power supply allows the output from photocoupler 11 to be kept active.

Even when the operator releases press-button switch 12 afterwards, the output from photocoupler 11 is active. The secondary power supply thus continues to output (power), thereby allowing continued operation of the electric apparatus.

Remote signal control circuit 19 has signal input terminals that invert the remote control signal to a LOW level. One of the terminals is for outputting a signal through the CPU: it outputs a signal to turn off the remote control signal when a given period time elapses or when an automatic inversion switch is pressed.

Another terminal is for outputting a signal through a monitoring circuit to shut off power supply independent of the CPU in the apparatus when an abnormality is detected.

As a signal through the CPU or a signal through monitoring circuit comes in, the remote control signal levels off to a LOW level, and photocoupler 11 is turned off, thereby shutting off the output from the secondary power supply.
While the secondary power supply is leveling off, remote signal control circuit 19 maintains the remote control signal in a LOW mode and does not allow the remote control signal to be inverted to a HIGH mode even when the voltage applied to remote signal control circuit 19 is in the unstable operating region. This ensures stable shut off of the apparatus.

In the stand by mode, power supply is maintained while the secondary power supply end is unloaded. This requires little current during the stand by mode, greatly enhancing the power consumption saving advantages of the apparatus.

As described above, according to the power supply control circuit, as an operator presses a switch, a switching circuit momentarily short circuits to activate the power supply, which then maintains the active mode of the remote control signal from the photocoupler. The active mode is maintained only during a given period time after the switching circuit is opened. The remote control signal is inverted to a negative cycle as soon as the given period time elapses. The power supply can thus automatically be shut off without using an external power supply as long as a small number of circuit components are added to the conventional circuit, subsequently saving power consumption to a great extent.

Moreover, the power supply control circuit has also been described having an automatic inversion switch that inverts the remote control signal to a negative cycle; the power supply can automatically be shut off during a period starting from opening of the switch circuit and any time before a given period time elapses.

Further, the power supply control circuit has further been described such that, when the abnormality detection circuit detects an abnormality in the electric apparatus, the remote control signal is inverted to a negative cycle. The power supply is thus automatically shut off when an abnormality is present in the electric apparatus.

While the foregoing description and drawings represent the present invention, it will be obvious to those skilled in the art that various changes may be made therein without departing from the true spirit and scope of the present invention.

## Claims

1. A power supply control circuit (10) that automatically shuts off power supply to an electric apparatus, the power supply control circuit (10) comprising:
a photocoupler (11) for inputting a remote control signal;
a switching circuit (13) having a press-button switch (12) provided toward an output end of the photocoupler (11); and
a power supply that is momentarily activated by shorting the switching circuit (13);
thereby providing a self-holding circuit that maintains the active mode of said remote control signal for the photocoupler (11).

2. The power supply control circuit as set forth in claim 1 further comprising an automatic inversion switch that inverts the remote control signal to a negative cycle.

3. The power supply control circuit as set forth in claim 1 further comprising an abnormality detection circuit for detecting an abnormality in the electric apparatus to invert the remote control signal to a negative cycle upon detection of an abnormality in the electric apparatus.

4. The power supply control circuit as set forth in claim 1 which monitors the mode of the electric apparatus to invert the remote control signal to a negative cycle when the electric apparatus does not operate for a given period time.
